Europäisches Patentamt

European Patent Office

Office européen des brevets

(19)

(11) **EP 1 318 660 A2**

(12) **EUROPEAN PATENT APPLICATION**

(43) Date of publication:
**11.06.2003 Bulletin 2003/24**

(51) Int Cl.$^7$: **H04N 1/06**

(21) Application number: **02027147.4**

(22) Date of filing: **04.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **06.12.2001 JP 2001372745**

(71) Applicant: **Fuji Photo Film Co., Ltd.
Kanagawa (JP)**

(72) Inventor: **Uemura, Takayuki,
c/o Fuji Photo Film Co.Ltd.
Ashigarakami-gun, Kanagawa (JP)**

(74) Representative: **Klunker . Schmitt-Nilson . Hirsch
Winzererstrasse 106
80797 München (DE)**

(54) **Image-recording apparatus and method**

(57)    In order to can obtain parallelism of an image with respect to an image recording medium, there is provided an image-recording apparatus comprising a rotary body on which the recording medium has been wound, the image-recording section, which includes a plurality of light sources arranged in the sub-scanning direction, the image-recording section being capable of contemporaneously forming a plurality of main scanning lines on the recording medium in accordance with one cycle of main scanning, the recording medium having been pre-inclined with respect to the rotary body when being wound thereon, such that the main scanning lines formed on the recording medium are substantially parallel with one edge of the recording medium; and a control section which alters timing for forming the main scanning lines of each main scan on the basis of an angle at which the recording medium is wound with respect to the rotary body.

FIG.1

EP 1 318 660 A2

## Description

Field of the Invention

The present invention relates to an image-recording apparatus and method for recording an image onto a recording medium that has been wound onto a peripheral surface of a rotary body, in which a rotation direction of the rotary body is a main scanning direction, and an axial direction of the rotary body is a sub-scanning direction.

Description of the Related Art

Technologies (printing plate exposure devices) have been developed which record an image with a direct laser beam or the like at a photosensitive layer (emulsion surface) of a printing plate which is a sheet-form recording material, particularly a printing plate which is provided with a photosensitive layer on a support. With such technologies, rapid image recording on printing plates is enabled.

In such a printing plate automatic exposure device, in a state in which a printing plate has been wound onto a peripheral surface of a rotary drum, the rotary drum is rotated at high speed (main scanning), and a recording head (exposure head) moves along an axial direction of the rotary drum (sub-scanning). Hence, an image is recorded on the printing plate.

While the rotary drum is rotated and main scanning is carried out, the sub-scanning proceeds. At this time, main scanning lines are inclined with respect to an edge of the printing plate that is orthogonal to an axial direction of the rotary drum. This cannot be compensated for by "software" means. Therefore, inclination of the main scanning lines with respect to the printing plate is eliminated by winding the printing plate on at an angle with respect to the rotary drum.

However, when inclined winding of the printing plate is carried out, each of writing start positions of main scanning is shifted in the main scanning direction. In particular, when a recording head is used in which a plurality of light sources for recording are arranged in the sub-scanning direction, so as to form a plurality of a plurality of main scanning lines in a single cycle of main scanning, the main scanning writing start positions for each main scan are shifted between successive main scans. These shifts are of a scale too large to be dealt with by conventional compensation.

## SUMMARY OF THE INVENTION

In consideration of the circumstances described above, an object of the present invention is to provide an image-recording apparatus which, in a state in which a recording material is wound on a rotating body, can assure parallelism of main scanning lines with respect to peripheral end sides of the recording material and parallelism of a line formed by connecting main scanning writing start positions with respect to end sides orthogonal to the peripheral end sides of the recording material when an image is recorded with a scanning optical system in which a plurality of light sources for image recording are arranged in the sub-scanning direction.

A first aspect of the present invention is an image-recording apparatus for recording an image on a recording medium by moving an image-recording section in an axial direction of a rotary body on which the recording medium is wound while the rotary body is rotated, a direction of rotation of the rotary body being a main scanning direction and the axial direction of the rotary body being a sub-scanning direction, wherein the image-recording section, which includes a plurality of light sources arranged in the sub-scanning direction, is capable of contemporaneously forming a plurality of main scanning lines on the recording medium in accordance with one cycle of main scanning, the wound recording medium is inclined with respect to the rotary body at an angle such that the main scanning lines formed on the recording medium are substantially parallel with one edge of the recording medium, and the image-recording apparatus includes a control section which alters timing for forming the main scanning lines of each main scan on the basis of the angle.

A second aspect of the present invention is an image-recording apparatus in accordance with the first aspect, in which the control section stepwise alters the timing for forming the main scanning lines of each main scan on the basis of the angle such that, for each main scan, a forming position of the main scanning lines with respect to the rotary body is offset stepwise in the main scanning direction.

A third aspect of the present invention is an image-recording apparatus in accordance with the second aspect, in which a forming commencement position relative to the rotary body of main scanning lines of an (N+1)th main scan, where N is an integer of at least 1, is offset in the main scanning direction from a forming commencement position relative to the rotary body of main scanning lines of an Nth main scan by an amount determined on the basis of the angle.

A fourth aspect of the present invention is an image-recording apparatus in accordance with the first aspect, in which the control section stepwise alters the timing for forming the main scanning lines of each main scan on the basis of the angle such that a line joining forming commencement positions of each main scanning line of respective main scans, that is formed by a predetermined light source of the image-recording section, is substantially parallel with an edge of the recording medium that is orthogonal with the one edge thereof.

A fifth aspect of the present invention is an image-recording apparatus in accordance with the third aspect, in which the amount determined on the basis of the angle of winding is an amount in an allowable range which is determined in accordance with a resolution of the image that is to be recorded on the recording medium.

A sixth aspect of the present invention is an image-recording apparatus in accordance with the first aspect, in which the image-recording section comprises a plurality of units that each include a predetermined number of light sources, and for each main scan, the control section stepwise alters the timing for forming of main scanning lines by each unit on the basis of the angle.

A seventh aspect of the present invention is an image-recording apparatus in accordance with the first aspect, in which the control section controls timing for forming the main scanning lines of each main scan on the basis of variations in relative speed of the rotary body and the image recording section in at least one of the main scanning direction and the sub-scanning direction.

An eighth aspect of the present invention is an image-recording method for recording an image on a recording medium by moving an image-recording section in an axial direction of a rotary body on which the recording medium is wound while the rotary body is rotated, a direction of rotation of the rotary body being a main scanning direction and the axial direction of the rotary body being a sub-scanning direction, wherein the image-recording section, which includes a plurality of light sources arranged in the sub-scanning direction, is capable of contemporaneously forming a plurality of main scanning lines on the recording medium in accordance with one cycle of main scanning, and the wound recording medium is inclined with respect to the rotary body at an angle such that the main scanning lines formed on the recording medium are substantially parallel with one edge of the recording medium, the method comprising the step of: altering timing for forming the main scanning lines of each main scan on the basis of the angle.

A ninth aspect of the present invention is an image-recording method in accordance with the eighth aspect, in which the timing for forming the main scanning lines of each main scan is stepwise altered on the basis of the angle such that, for each main scan, a forming position of the main scanning lines with respect to the rotary body is offset stepwise in the main scanning direction.

A tenth aspect of the present invention is an image-recording method in accordance with the ninth aspect, in which a forming commencement position relative to the rotary body of main scanning lines of an (N+1)th main scan, where N is an integer of at least 1, is offset in the main scanning direction from a forming commencement position relative to the rotary body of main scanning lines of an Nth main scan by an amount determined on the basis of the angle.

An eleventh aspect of the present invention is an image-recording method in accordance with the eighth aspect, in which the timing for forming the main scanning lines of each main scan on the basis of the angle is altered such that a line joining forming commencement positions of each main scanning line of respective main scans, that is formed by a predetermined light source of the image-recording section, is substantially parallel with an edge of the recording medium that is orthogonal with the one edge thereof.

A twelfth aspect of the present invention is an image-recording method in accordance with the tenth aspect, in which the amount determined on the basis of the angle of winding is an amount in an allowable range which is determined in accordance with a resolution of the image that is to be recorded on the recording medium.

A thirteenth aspect of the present invention is an image-recording method in accordance with the eighth aspect, in which the image-recording section includes a plurality of units that each include a predetermined number of light sources, and for each main scan, the timing for forming main scanning lines by each unit is stepwise altered on the basis of the angle.

A fourteenth aspect of the present invention is an image-recording method in accordance with the eighth aspect, in which the timing for forming the main scanning lines of each main scan is controlled on the basis of variations in relative speed of the rotary body and the image recording section in at least one of the main scanning direction and the sub-scanning direction.

By offsetting the image writing start positions stepwise for each main scan (shifting timings for forming the main scanning lines), the plurality of light sources can be controlled by a single control system, and circuit structure of a control section can be made more simple.

The offset amount of the image writing start positions is determined in accordance with the angle of inclination of the recording material relative to the rotating body. However, the offset amount may in addition be subjected to a limit in accordance with a resolution requested for the image. Consequently, the offset value is set to a range that is allowable in accordance with this resolution. Thus, the resolution can be maintained.

In addition to offsetting the writing start timings stepwise for each main scan, the image writing start timings may be shifted in the main scanning direction for unit sets formed by dividing the plurality of light sources into n divisions. In this case, output of image data is delayed not for all of the light sources but for each of the units. Thus, structure of a circuit for delaying can be made simple.

Shifting of the positions in the main scanning direction may include shifts due to mechanical causes. For example, the main scanning writing start positions may be shifted due to (non-linearity of) a movement speed of the image-recording section during sub-scanning, or the main scanning writing start positions may be shifted due to eccentricity of a rotating drum, or the like. By specifying delay durations for output of the image data on the basis of causes of position shifting that include at least one of these causes, image quality can be further improved.

BRIEF DESCRIPTION OF THE DRAWINGS

Figure 1 is a schematic view of a printing plate automatic exposure device relating to a present embodiment.
Figure 2 is a perspective view of a time of removal from a plate ejection guide of a transport guide unit (a state of provisional positioning of a printing plate).
Figure 3 is a perspective view of the time of removal from the plate ejection guide of the transport guide unit (the state of provisional positioning of a printing plate).
Figure 4 is a block diagram showing a control system for image recording control.
Figure 5 is an elevational view of a printing plate, which shows main scanning writing start positions of an image, which relate to the present embodiment.
Figure 6 is an elevational view of a printing plate, which shows main scanning writing start positions of an image, which relate to a variant example.
Figure 7A is a schematic diagram showing recording head writing start positions in a case in which mechanical errors have been applied after main scanning writing start position correction.
Figure 7B is a timing chart of the writing of Figure 7A.

DESCRIPTION OF THE PREFERRED EMBODIMENTS

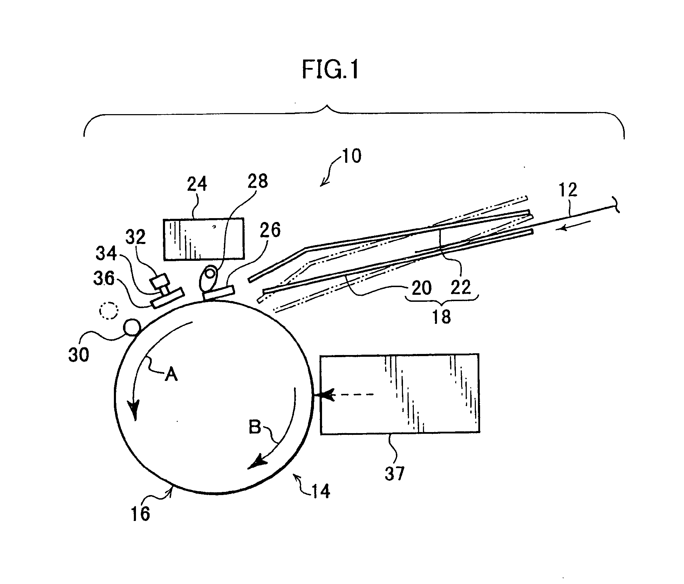

Figure 1 shows a printing plate automatic exposure device 10 relating to a present embodiment.

The printing plate automatic exposure device 10 can be divided into two blocks: an exposure section 14 which exposes an image by irradiating a light beam at an image-forming layer of a printing plate 12; and a transport guide unit 18 which transports the printing plate 12 to the exposure section 14. The printing plate 12 that has been exposure-processed by the printing plate automatic exposure device 10 is fed out to an unillustrated developing apparatus which is provided adjacent to the printing plate automatic exposure device 10.

The exposure section 14 is principally structured by a rotary drum 16, at a circumferential surface of which the printing plate 12 is wound on and retained. The printing plate 12 is guided by the transport guide unit 18 and fed in from a direction tangential to the rotary drum 16. The transport guide unit 18 is structured by a plate feeding guide 20 and a plate ejection guide 22.

The plate feeding guide 20 and the plate ejection guide 22 which form a substantial V-shape in cross section of the transport guide unit 18 are disposed so as to oppose one another, and the plate feeding guide 20 and the plate ejection guide 22 are structured to rotate through a predetermined angle about a central vicinity of the transport guide unit 18, as shown in Figure 1. As a result of this rotation, either the plate feeding guide 20 or the plate ejection guide 22 can be selectively corresponded to the rotary drum 16 (disposed along the tangential direction of the rotary drum 16).

A punching mechanism 24, for punching a through-hole to serve as a reference for winding the printing plate 12 onto an unillustrated plate cylinder of a rotation mechanism, is disposed in a vicinity of the transport guide unit 18. When the plate feeding guide 20 is corresponded with the punching mechanism 24, a front end of the printing plate 12 can be fed into the punching mechanism 24. Specifically, the printing plate 12 is first guided by the plate feeding guide 20 and fed into the punching mechanism 24 and, for example, a round hole and a long hole are punched in the front end of the printing plate 12. Then the printing plate 12 is temporarily moved backward at the plate feeding guide 20, after which the printing plate 12 (the plate feeding guide 20) is moved by rotation of the transport guide unit 18 to a position corresponding to the rotary drum 16.

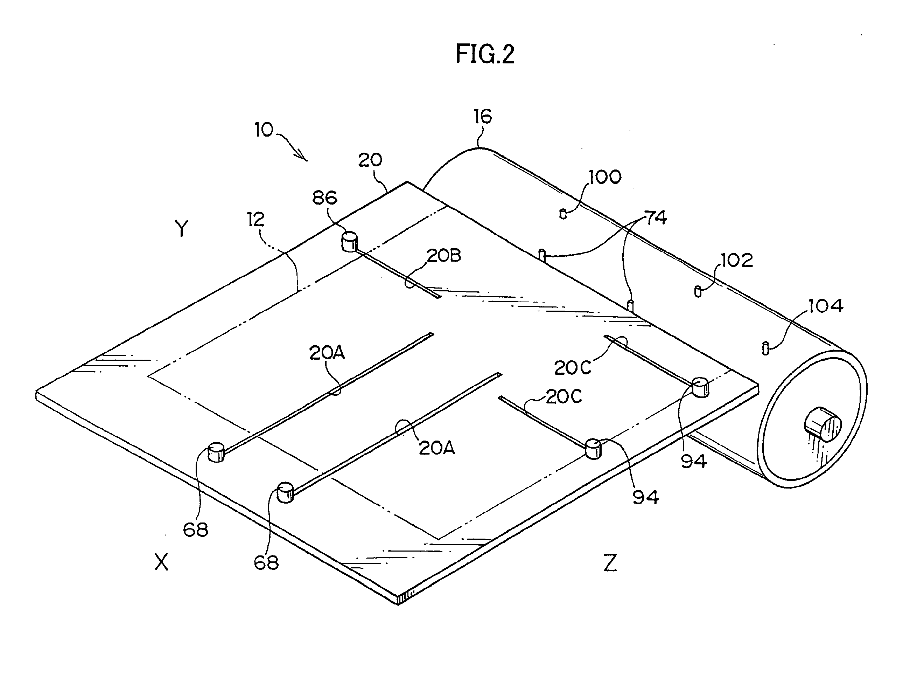

Figure 2 shows the transport guide unit 18 in a state in which the plate ejection guide 22 is removed (that is, only the plate feeding guide 20 is shown).

Pushing portions 68 are provided at a front face (upper face) of the plate feeding guide 20, at an end portion at a side of the plate feeding guide 20 which is opposite to a side thereof at which the rotary drum 16 is disposed (the X side end portion in Figure 2). The pushing portions 68 are rotatably supported at support shafts (not shown). The support shafts penetrate through a pair of slit holes 20A formed in the plate feeding guide 20 (penetrating from the front face (upper face) side of the plate feeding guide 20 to a rear face (lower face) side thereof).

A pair of positioning pins 74 is provided in correspondence with the pushing portions 68 at an end portion of the plate feeding guide 20 at the side at which the rotary drum 16 is disposed. The positioning pins 74 can be protruded and withdrawn with respect to the front face of the plate feeding guide 20.

The positioning pins 74 are movable between two positions: a protruding position which protrudes higher than the front face of the plate feeding guide 20; and a withdrawn position which is withdrawn lower than the front face of the plate feeding guide 20.

At one end portion in a width direction of the plate feeding guide 20 (the Y side end portion in Figure 2), a width direction pushing portion 86 is provided. The width direction pushing portion 86 is movable along an axial direction of the rotary drum 16. The width direction pushing portion 86 is rotatably supported by a support shaft (not shown). This support shaft penetrates through a slit hole 20B formed in the plate feeding guide 20 (penetrating from the front face (upper face) side of the plate feeding guide 20 to the rear face (lower face) side thereof).

As shown in Figure 2, the slit hole 20B extends in the axial direction of the rotary drum 16. Accordingly, the width direction pushing portion 86 is capable of moving along the slit hole 20B of the plate feeding guide 20, parallel to the axial direction of the rotary drum 16.

Correspondingly, as shown in Figure 2, at another end portion in the width direction of the plate feeding guide 20 (the Z side end portion in Figure 2), a pair of positioning pins 94 is provided. The positioning pins 94 are movable along the axial direction of the rotary drum 16. The positioning pins 94 are rotatably supported by support shafts (not shown). These support shafts penetrate through a pair of slit holes 20C formed in the plate feeding guide 20 (penetrating from the front face (upper face) side of the plate feeding guide 20 to the rear face (lower face) side thereof).

As shown in Figure 2, the slit holes 20C are mutually parallel and extend in the axial direction of the rotary drum 16. Accordingly, the positioning pins 94 are capable of moving along the slit holes 20C of the plate feeding guide 20, parallel to the axial direction of the rotary drum 16, to be disposed at predetermined positions in accordance with a size of the printing plate 12.

The rotary drum 16 is rotated by unillustrated driving means in a direction of loading and exposing the printing plate 12 (the direction of arrow A in Figure 1), and in a direction of removing the printing plate 12 (the direction of arrow B in Figure 1), which is a direction opposite to the direction of loading and exposing.

As shown in Figure 1, a front end chuck 26 is attached to the rotary drum 16 provided at the exposure section 14, at a predetermined position on an outer peripheral surface of the rotary drum 16. At the exposure section 14, when the printing plate 12 is to be loaded at the rotary drum 16, first, the rotary drum 16 is rotated and stopped so as to position the rotary drum 16 at a printing plate loading position, such that the front end chuck 26 faces a front end of the printing plate 12 that is to be fed in by the plate feeding guide 20 of the transport guide unit 18.

A loading cam 28, which faces the front end chuck 26 at the printing plate loading position, is provided in the exposure section 14. The loading cam 28 rotates and pushes one end side of the front end chuck 26. As a result, insertion of the printing plate 12 between the front end chuck 26 and the peripheral surface of the rotary drum 16 is enabled.

In a state in which the printing plate 12 has been inserted between the front end chuck 26 and the rotary drum 16, the loading cam 28 returns to an original position thereof, and pressure on the front end chuck 26 is released. As a result, the front end of the printing plate 12 is sandwiched and retained between the front end chuck 26 and the peripheral surface of the rotary drum 16.

At this time, a front end of the printing plate 12 abuts against a pair of positioning pins 100 and 102, which protrude at predetermined positions of the peripheral surface of the rotary drum 16. One end portion in the width direction of the printing plate 12 abuts against a positioning pin 104, which protrudes at one end portion in the axial direction of the rotary drum 16. Thus, the printing plate 12 is definitively positioned with respect to the rotary drum 16.

In the exposure section 14, when the front end of the printing plate 12 is fixed at the rotary drum 16, the rotary drum 16 rotates in the direction of loading and exposing. As a result, the printing plate 12 that is fed in from the plate feeding guide 20 of the transport guide unit 18 is wound onto the peripheral surface of the rotary drum 16.

A squeeze roller 30 is disposed in a vicinity of the peripheral surface of the rotary drum 16, at a downstream side in the direction of loading and exposing of the loading cam 28. The printing plate 12 that is wound on the rotary drum 16 is pushed toward the rotary drum 16 by the squeeze roller 30 moving toward the rotary drum 16. Thus, the printing plate 12 is closely contacted with the peripheral surface of the rotary drum 16.

Furthermore, a rear end chuck application/removal unit 32 is disposed in a vicinity of the peripheral surface of the rotary drum 16, upstream in the direction of loading and exposing of the rotary drum 16 from the squeeze roller 30. At the rear end chuck application/removal unit 32, a rear end chuck 36 is mounted at a distal end of a shaft 34 which protrudes toward the rotary drum 16.

When a rear end of the printing plate 12 that is being wound onto the rotary drum 16 opposes the rear end chuck application/removal unit 32, the shaft 34 is projected, and the rear end chuck 36 is mounted at a predetermined position of the rotary drum 16. As a result, the rear end chuck 36 sandwiches and retains the rear end of the printing plate 12 between the rear end chuck 36 and the rotary drum 16.

When the front end and rear end of the printing plate 12 are retained at the rotary drum 16 of the exposure section 14, the squeeze roller 30 is moved away therefrom. Thereafter, the rotary drum 16 is rapidly rotated at a predetermined rotation speed. Contemporaneously with this rotation of the rotary drum 16, light beams, which are modulated on the basis of image data, are irradiated from a recording head 37. Accordingly, the printing plate 12 is scanned and exposed on the basis of the image data.

When scanning exposure onto the printing plate 12 at the exposure section 14 has finished, the rotation of the rotary drum 16 is temporarily halted such that the rear end chuck 36, which is retaining the rear end of the printing plate 12, faces the rear end chuck application/removal unit 32. The rear end chuck 36 is removed from the rotary drum 16 and the rear end of the printing plate 12 is consequently released.

Thereafter, the rotary drum 16 is rotated in the direction of removing the printing plate 12, and the printing plate 12 is ejected, from the rear end side thereof, along the tangential direction of the rotary drum 16 to the plate ejection guide 22 of the transport guide unit 18. Subsequently, the printing plate 12 is transported to the developing apparatus for the next process.

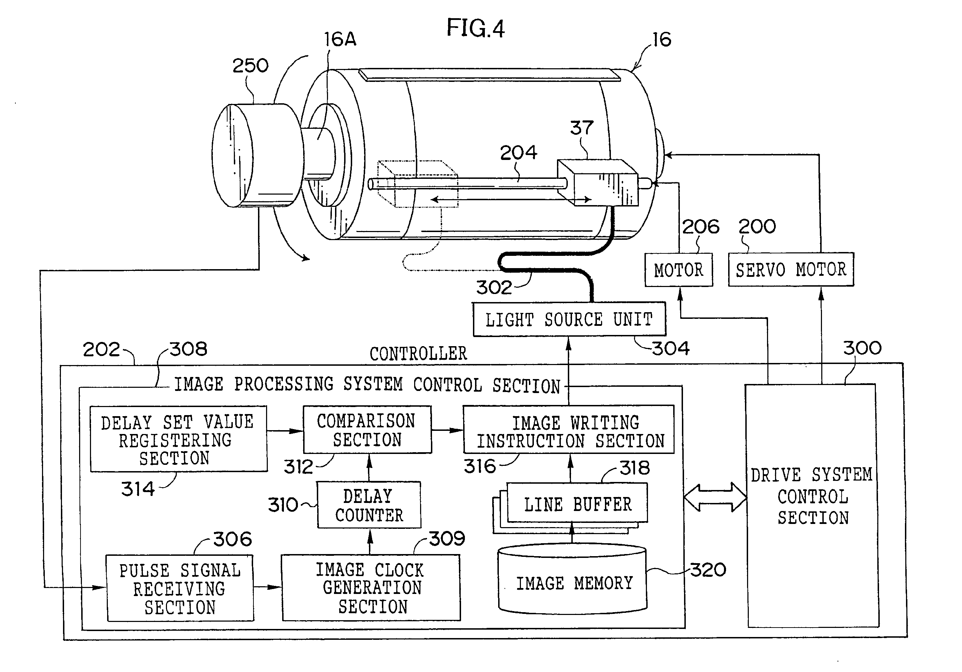

Figure 4 shows a control system for rotation of the rotary drum 16, movement of the recording head 37, and image recording by the recording head 37 on the basis of the image data.

The rotary drum 16 is rotated by driving force of a servo motor 200. A rotation speed of the servo motor 200 is controlled on the basis of driving signals from a drive system control section 300 of a controller 202.

The recording head 37 is moved along the axial direction of the rotary drum 16 by a ball screw mechanism. That is, a shaft 204, at which a male thread is formed, is rotated by a motor 206, and thus the recording head 37 is moved in the axial direction of the rotary drum 16. A driving speed of the motor 206 is controlled on the basis of driving signals from the drive system control section 300 of the controller 202.

The recording head 37 is connected with a light source unit 304 by an optical fiber 302. Light emitted by a plurality of laser diodes (semiconductor lasers), which are mounted at the light source unit 304, is guided to the recording head 37 by the optical fiber 302. With this structure, a plurality of main scanning lines are recorded contemporaneously during one cycle of main scanning (one rotation of the rotary drum 16).

A rotary encoder 250 is attached at a rotation shaft 16A at one end of the rotary drum 16. The rotary encoder 250 outputs pulse signals in accordance with rotation of the rotary drum 16, and these pulse signals are inputted to a pulse signal receiving section 306 of the controller 202.

The pulse signal receiving section 306 structures a portion of an image processing system control section 308 of the controller 202. a reference signal for each rotation of the rotary drum 16 is generated on the basis of the pulse signal received at the pulse signal receiving section 306. The reference signal and the pulse signal are transmitted from the pulse signal receiving section 306 to an image clock generation section 309. At the image clock generation section 309, the pulse signal is, for example, divided (demultiplied) , and an image clock (signal) having a predetermined frequency is generated. Thus, the reference signal for each turn of the rotary drum 16 and the image clock are generated from the pulse signal.

The reference signal and image clock generated at the image clock generation section 309 are inputted to a delay counter 310. The image clock is counted, while being reset at each reference signal, and these are transmitted to a comparison section 312.

A delay set value is inputted to the comparison section 312 from a delay set value registering section 314. At the comparison section 312, an image writing time is determined on the basis of the inputted delay set value and the reference signal, and the image clock is transmitted to an image writing instruction section 316.

A plurality of line buffers 318 is connected to the image writing instruction section 316. The line buffers 318 receive image data in amounts corresponding to a number of lines required for a single cycle of main scanning from an image memory 320. Image signals are transmitted to the light source unit 304 from the line buffers 318 on the basis of instructions from the image writing instruction section 316.

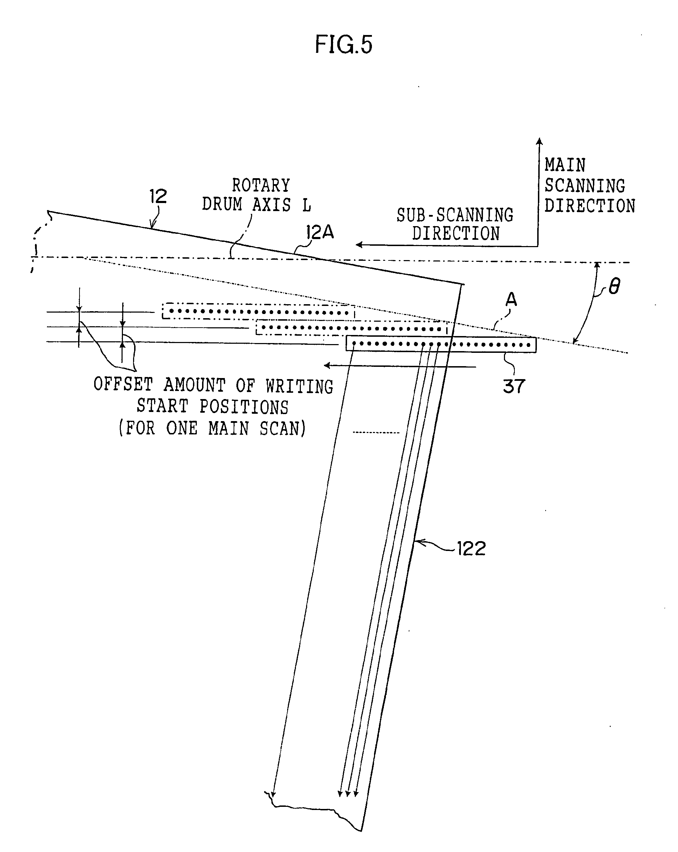

In the image processing system control section 308 having the structure described above, it is assumed that the printing plate 12 is inclined with respect to the axis L of the rotary drum 16 when wound onto the rotary drum 16, as shown in Figure 5.

An angle of inclination θ of winding of the printing plate 12 is specified on the basis of a rotation speed (a corresponding linear velocity) of the rotary drum 16 and a movement speed of the recording head 37. That is, because the recording head 37 moves in the axial direction of the rotary drum 16 during rotation of the rotary drum 16, the main scanning lines are scanned in a helical form with respect to the peripheral surface of the rotary drum 16.

Accordingly, the printing plate 12 is inclined and wound on such that the main scanning lines are parallel to an edge of the printing plate 12 that is along the direction of winding onto the rotary drum 16. Hence, main scanning lines which are parallel to this edge are scanned onto the printing plate 12.

On the other hand, due to the printing plate 12 being inclined when wound on, writing start positions of the main scanning lines in an image recording region are displaced.

Accordingly, in the present embodiment, with the image processing system control section 308 described above, the writing start positions of the main scanning lines are offset once for each cycle of main scanning.

A total offset amount can be obtained from a distance W, from a writing start position of a first line to a writing start position of a last line during image writing (a total width of sub-scanning), and the angle of inclination θ.

That is, if the offset amount is $L_{OS}$:

$$L_{OS} / W = \sin \theta \qquad (1)$$

and

$$L_{OS} = W \sin \theta \qquad (2)$$

Herein, the offset amount $L_{OS}$ is dispersed between all the main scans (an each offset value $L_{OS/E}$ is found by dividing the offset amount $L_{OS}$ by the number of main scans). Further, the total offset amount $L_{OS}$ is subjected to a limit in accordance with a resolution. Specifically, in a case in which a limit value $L_{LT}$ is greater than the offset amount $L_{OS}$, $L_{OS}$ is left at the value of $L_{OS}$, and in a case in which the limit value $L_{LT}$ is less than or equal to the offset amount $L_{OS}$, $L_{OS}$ is set to the value of $L_{LT}$. Thus, the offset is implemented in a range which does not exceed the limit value.

The offset amount for each main scan $L_{OS/E}$, which is obtained as described above, is registered to serve as the aforementioned delay set value. Thus, image output timings for the respective main scans are displaced (delayed) stepwise and, as shown in Figure 5, a line joining the writing start positions of the respective main scanning lines (see broken line A in Figure 5) is substantially parallel to an edge 12A of the printing plate 12 that runs substantially along the axis of the rotary drum 16.

Now, operation of the present embodiment will be described.

First, the printing plate 12 is loaded at the plate feeding guide 20. At this time, the printing plate 12 may be loaded "by hand", or may be fed in by an automatic sheet feeder or the like.

This printing plate 12, which has just been loaded at the plate feeding guide 20, is likely not to have an appropriate loading position, inclination with respect to the plate feeding guide 20, and the like. In this state, an unillustrated pusher unit is operated, the pushing portions 68 move, and the printing plate 12 is pushed. At this time, by two (or more of) pushing portions 68 abutting against the printing plate 12 during the pushing movement, the angle of the printing plate 12 is corrected.

The positioning pins 74 provided at the rotary drum 16 side end portion of the plate feeding guide 20 are positioned at the protruded position. Accordingly, the printing plate 12 abuts against these positioning pins 74, and thus provisional positioning in a length direction of the printing plate 12 is completed.

Next, an unillustrated width direction pusher unit is operated, the width direction pushing portion 86 moves, and the printing plate 12 abuts against the positioning pins 94, which are disposed at predetermined positions on the basis of a preset size of the printing plate 12. Thus, provisional positioning in the width direction of the printing plate 12 is completed.

In this state, in which the printing plate 12 is positioned in the length and width directions, the positioning pins 74 at the protruding positions are moved to the withdrawn positions thereof. Thereafter, the printing plate 12 is further moved toward the rotary drum 16 by the pushing portions 68 of the pusher unit, and the printing plate 12 is abutted against the pair of reference pins 100 and 102 provided at the rotary drum 16. Consequently, the position of the front end of the printing plate 12 is definitively positioned.

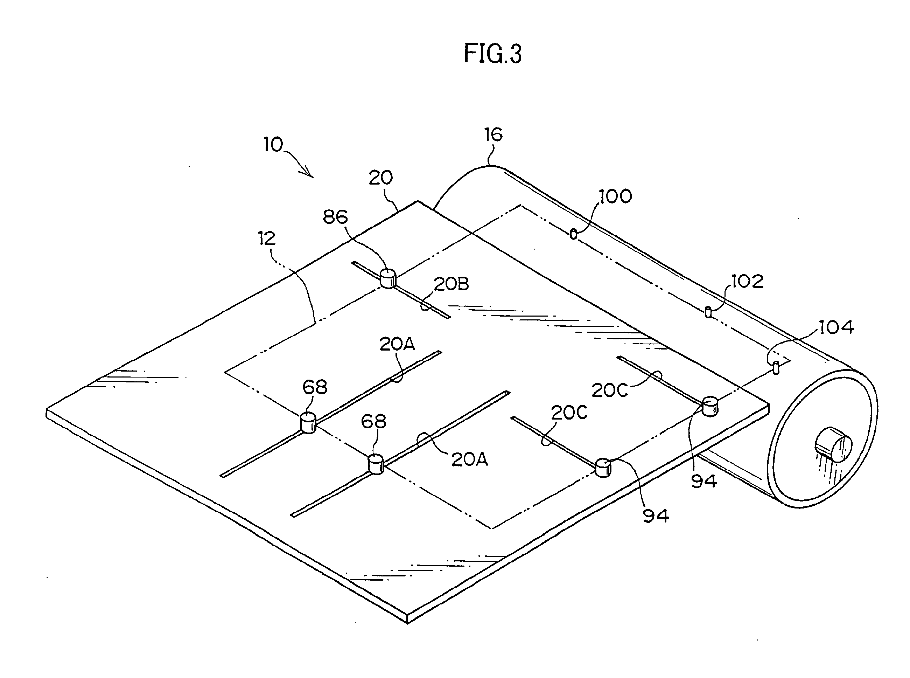

Next, the printing plate 12 in this state is moved in the width direction by the width direction pushing portion 86 of the width direction pusher unit, and is abutted against the reference pin 104. Because the printing plate 12 has already been positioned by the positioning pins 94 (the provisional position shown in Figure 2), this width direction movement is very small. Consequently, the printing plate 12 is unambiguously positioned with respect to the rotary drum 16 (the definitive position shown in Figure 3).

In the present embodiment, the printing plate 12 is inclined at the predetermined angle θ with respect to the axis of the rotary drum 16 and wound at the rotary drum 16. The angle of inclination θ is determined from the speed of rotation (linear velocity) of the rotary drum 16 and the speed of movement of the recording head 37. Because of this inclination, the main scanning lines are parallel to the edge that is along the direction of winding of the printing plate 12 on to the rotary drum 16.

The printing plate 12 that has been fed to the rotary drum 16 and definitively positioned is tightly wound on the peripheral surface of the rotary drum 16 with the front end chuck 26 and the rear end chuck 36. Thus, preparation for exposure is completed.

Image data is read in, and exposure processing by light beams from the recording head 37 is commenced. For this exposure processing, the rotary drum 16 is rotated at high speed (main scanning), and the recording head 37 moves along the axial direction of the rotary drum 16. This is "scanning exposure". Control of this scanning exposure is described later.

When the exposure processing is completed, the transport guide unit 18 is switched (the plate ejection guide 22 is corresponded to the drum 16). Then the printing plate 12 wound on the rotary drum 16 is discharged in the tangential direction. At this time, the printing plate 12 is fed to the plate ejection guide 22.

When the printing plate 12 has been fed to the plate ejection guide 22, the transport guide unit 18 is switched, the plate ejection guide 22 is corresponded to an ejection port, and the printing plate 12 is ejected. The developing section is provided in the direction of ejection. Thus, the printing plate 12 continues on to development processing.

Next, output control of image signals for the control of the scanning exposure will be described.

First, when the rotary drum 16 rotates, pulse signals are inputted at the pulse signal receiving section 306 by the rotary encoder 250 in accordance with the rotation.

At the pulse signal receiving section 306, the reference signal is generated for each turn of the rotary drum 16. The reference signals and the pulse signals are together transmitted to the image clock generation section 309. At the image clock generation section 309, the image clock having the predetermined frequency is generated by, for example, dividing the pulse signals.

The reference signals and the image clock are inputted to the delay counter 310. The image clock signals are counted, being reset for each of the reference signals, and these are transmitted to the comparison section 312.

At the comparison section 312, on the basis of the reference signals and the delay set value from the delay set value registering section 314, the image clock is transmitted to the image writing instruction section 316. Namely, on the basis of the delay set value, transmitting timings of the image clock are delayed for each main scanning.

At the image writing instruction section 316, the image data of the amount corresponding to the number of lines required for one cycle of main scanning is read from the plurality of line buffers 318, and transmitted to the light source unit 304.

Because the respective main scans are delayed stepwise by the above-described timings, the writing start positions of the main scanning lines are offset along the inclination of the printing plate 12 for units of single cycles of main scanning, as shown in Figure 5. Regarded altogether, the line A that joins the writing start positions of the respective main scans can be made substantially parallel to the edge 12A of the inclined printing plate 12 that runs substantially along the direction of the axis L of the rotary drum 16.

In the present embodiment as described above, the printing plate 12 is wound on the rotary drum 16 and, while the rotary drum 16 is rotated at high speed, the recording head 37 is moved along the axial direction of the rotary drum 16 and the image is recorded. Here, because the printing plate 12 is wound inclined at the angle θ with respect to the rotary drum 16, a degree of parallelism between the main scanning lines, which are inclined in the helical form with respect to the rotary drum 16, and an edge 122 of the printing plate 12, which runs along the direction of winding on the rotary drum 16, can be maintained.

Image writing start timings are specified such that shifts of the writing start positions of the respective main scanning lines, which are caused by this maintenance of parallelism of the main scan lines, are offset (delayed) stepwise for each main scan. Therefore, if the printing plate 12 is regarded as a whole, the line A, which joins the writing start positions, can be set to be substantially parallel with the edge 12A of the printing plate 12, which runs substantially along the axial direction of the rotary drum 16.

Conventionally, in order to provide such parallelism, it was necessary to carry out separate processing for each main scanning line. Thus, circuit structure of a delay circuit and the like became larger, and control was extremely complex. However, in the present embodiment, because stepwise control is carried out for units of one cycle of main scanning (a plurality of main scan lines are formed by one main scanning), processing can be carried out with a relatively simple control system.

In the present embodiment, the offset (displacement of the writing start position) is carried out once for each cycle of main scanning. However, the present invention is not limited to this. Output of the image data may be delayed stepwise for each of the light sources during a cycle of main scanning.

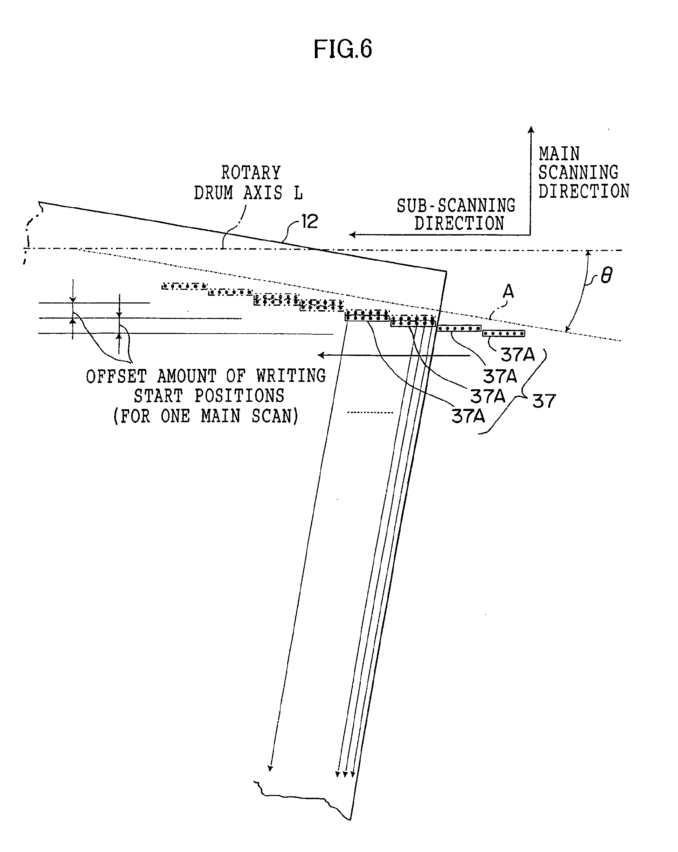

In other words, as shown in Figure 6, in a case in which one cycle of main scanning has 24 channels (for 24 main scan lines), these main scanning has 24 channels may be grouped into four 6-channel units (units 37A) by dividing into four divisions. For each of these units 37A, the writing start timing may be shifted stepwise by a quarter of the offset amount of one cycle.

Ultimately, such division leads to shifting the writing start timings for an individual light source. However, in order to keep the circuitry for delaying simple, it is preferable that the writing start timings are shifted stepwise for each of units having plurality of light sources.

Further, eccentricity of the rotary drum and/or non-linearity of the recording head are measured in advance and compensation amounts therefor preparatorily recorded, these compensation amounts can be applied to the displacement amounts (delay durations) of the writing start timings for offsetting. Thus, shifts of the main scanning writing start positions due to mechanical causes such as the eccentricity and/or the non-linearity described above can be compensated for at the same time as maintaining the parallelism. This compensation is preferably performed especially in a case of that the channels of one cycle of main scanning are grouped into plurality of units as described above.

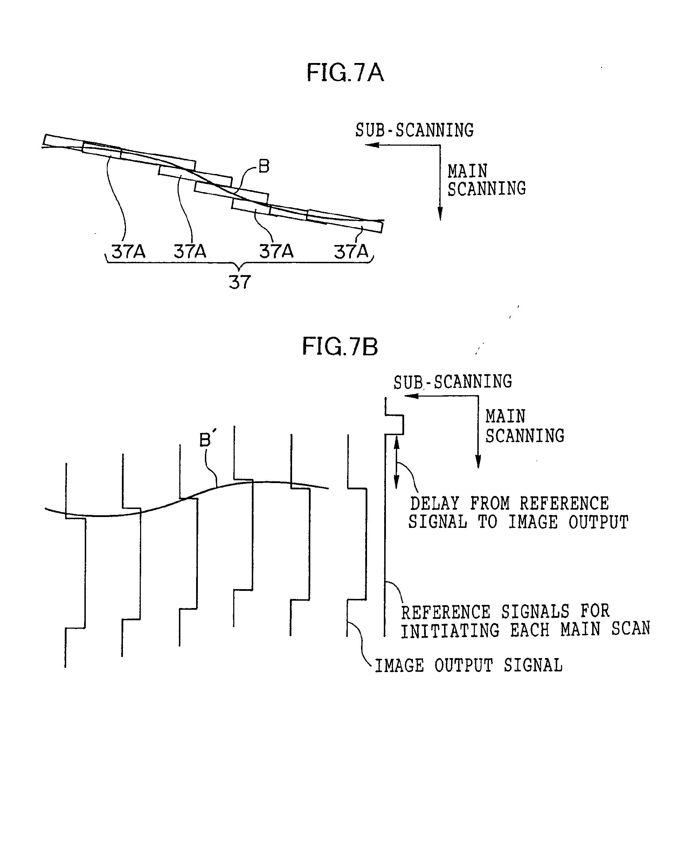

For example, as shown in Figure 7A, in a case in which the writing start positions of main scanning form a wave-like curved line B due to above mentioned mechanical causes, the writing start timings are shifted each of the divided units such that the wave-like curved line B becomes a desired straight line. Consequently, for the image data of the respective main scanning lines for each of the units inputted into the light source unit 304, durations from the reference signal to output of the image data are shifted on the basis of a wave-like curved line B', as shown in Figure 7B. As a result, the line joining the writing start positions of main scanning can becomes straight line and can be made substantially parallel to the edge 12A of the printing plate 12.

As is explained above, in the present embodiment, image writing start positions are offset for each cycle of main scanning. As well as this, image writing start timings may be shifted for unit sets obtained by dividing one main scan into n divisions (n being a positive integer of 2 or greater). Thus, the line A joining the writing start positions of main scanning can be made substantially parallel to the edge 12A of the printing plate 12 angled and wound on the rotary drum 16, which edge 12A runs along the axial direction of the rotary drum 16, and deformation of the image can be prevented.

Above, explanations have been given for interlaced scanning, but the present invention may also be implemented for non-interlaced scanning.

The present invention as described above has excellent effects in that, in a state in which a recording material is wound on a rotating body, parallelism of main scanning lines with respect to a peripheral end side of the recording material and parallelism of main scanning writing start positions in a sub-scanning direction, when an image is recorded with a scanning optical system in which a plurality of light sources for image recording are arranged in the sub-scanning direction, can be assured.

## Claims

1. An image-recording apparatus for recording an image on a recording medium by moving an image-recording section in an axial direction of a rotary body on which the recording medium is wound while the rotary body is rotated, a direction of rotation of the rotary body being a main scanning direction and the axial direction of the rotary body being a sub-scanning direction, wherein

   the image-recording section, which includes a plurality of light sources arranged in the sub-scanning direction, is capable of contemporaneously forming a plurality of main scanning lines on the recording medium in accordance with one cycle of main scanning,

   the wound recording medium is inclined with respect to the rotary body at an angle such that the main scanning lines formed on the recording medium are substantially parallel with one edge of the recording medium, and

   the image-recording apparatus includes a control section which alters timing for forming the main scanning lines of each main scan on the basis of the angle.

2. The image-recording apparatus of claim 1, wherein the control section stepwise alters the timing for forming the main scanning lines of each main scan on the basis of the angle such that, for each main scan, a forming position of the main scanning lines with respect to the rotary body is offset stepwise in the main scanning direction.

3. The image-recording apparatus of claim 2, wherein a forming commencement position relative to the rotary body of main scanning lines of an (N+1)th main scan, where N is an integer of at least 1, is offset in the main scanning direction from a forming commencement position relative to the rotary body of main scanning lines of an Nth main scan by an amount determined on the basis of the angle.

4. The image-recording apparatus of claim 1, wherein the control section stepwise alters the timing for forming the main scanning lines of each main scan on the basis of the angle such that a line joining forming commencement positions of each main scanning line of respective main scans, that is formed by a predetermined light source of the image-recording section, is substantially parallel with an edge of the recording medium that is orthogonal with the one edge thereof.

5. The image-recording apparatus of claim 3, wherein the amount determined on the basis of the angle of winding is an amount in an allowable range which is determined in accordance with a resolution of the image that is to be recorded on the recording medium.

6. The image-recording apparatus of claim 1, wherein the image-recording section comprises a plurality of units that each include a predetermined number of light sources, and

   for each main scan, the control section stepwise alters the timing for forming of main scanning lines by each unit on the basis of the angle.

7. The image-recording apparatus of claim 1, wherein the control section controls timing for forming the main scanning lines of each main scan on the basis of variations in relative speed of the rotary body and the image recording section in at least one of the main scanning direction and the sub-scanning direction.

8. An image-recording method for recording an image on a recording medium by moving an image-recording section in an axial direction of a rotary body on which the recording medium is wound while the rotary body is rotated, a direction of rotation of the rotary body being a main scanning direction and the axial direction of the rotary body being a sub-scanning direction, wherein the image-recording section, which includes a plurality of light sources arranged in the sub-scanning direction, is capable of contemporaneously forming a plurality of main scanning lines on the recording medium in accordance with one cycle of main scanning, and the wound recording medium is inclined with respect to the rotary body at an angle such that the main scanning lines formed on the recording medium are substantially parallel with one edge of the recording medium, the method comprising the step of:

   altering timing for forming the main scanning lines of each main scan on the basis of the angle.

9. The image-recording method of claim 8, wherein the timing for forming the main scanning lines of each main scan is stepwise altered on the basis of the angle such that, for each main scan, a forming position of the main scanning lines with respect to the rotary body is offset stepwise in the main scanning direction.

10. The image-recording method of claim 9, wherein a forming commencement position relative to the rotary body of main scanning lines of an (N+1)th main scan, where N is an integer of at least 1, is offset in the main scanning direction from a forming commencement position relative to the rotary body of main scanning lines of an Nth main scan by an amount determined on the basis of the angle.

11. The image-recording method of claim 8, wherein the timing for forming the main scanning lines of each main scan on the basis of the angle is altered such that a line joining forming commencement positions of each main scanning line of respective main scans, that is formed by a predetermined light source of the image-recording section, is substantially parallel with an edge of the recording medium that is orthogonal with the one edge thereof.

12. The image-recording method of claim 10, wherein the amount determined on the basis of the angle of winding is an amount in an allowable range which is determined in accordance with a resolution of the image that is to be recorded on the recording medium.

13. The image-recording method of claim 8, wherein the image-recording section includes a plurality of units that each include a predetermined number of light sources, and

for each main scan, the timing for forming main scanning lines by each unit is stepwise altered on the basis of the angle.

14. The image-recording method of claim 8, wherein the timing for forming the main scanning lines of each main scan is controlled on the basis of variations in relative speed of the rotary body and the image recording section in at least one of the main scanning direction and the sub-scanning direction.

# FIG.1

# FIG.2

EP 1 318 660 A2

# FIG.3

EP 1 318 660 A2

# FIG.4

EP 1 318 660 A2

CONTROLLER

202  308

IMAGE PROCESSING SYSTEM CONTROL SECTION

| DELAY SET VALUE REGISTERING SECTION | COMPARISON SECTION | IMAGE WRITING INSTRUCTION SECTION |
|---|---|---|

314  312  316  318

310 — DELAY COUNTER

LINE BUFFER

306  309

| PULSE SIGNAL RECEIVING SECTION | IMAGE CLOCK GENERATION SECTION | IMAGE MEMORY |
|---|---|---|

320

DRIVE SYSTEM CONTROL SECTION

300

LIGHT SOURCE UNIT

302  304

MOTOR  206

SERVO MOTOR  200

250  16A  16  37  204

## FIG.5

ROTARY
DRUM AXIS L

12

12A

MAIN
SCANNING
DIRECTION

SUB-SCANNING
DIRECTION

θ

A

37

OFFSET AMOUNT OF WRITING
START POSITIONS
(FOR ONE MAIN SCAN)

122

# FIG.6

ROTARY
DRUM AXIS L

MAIN
SCANNING
DIRECTION

SUB-SCANNING
DIRECTION

12

$\theta$

A

37A

37A

37A

37A

37

OFFSET AMOUNT OF WRITING
START POSITIONS
(FOR ONE MAIN SCAN)

## FIG.7A

SUB-SCANNING

MAIN
SCANNING

B

37A    37A    37A    37A

37

## FIG.7B

SUB-SCANNING

MAIN
SCANNING

B'

DELAY FROM REFERENCE
SIGNAL TO IMAGE OUTPUT

REFERENCE SIGNALS FOR
INITIATING EACH MAIN SCAN

IMAGE OUTPUT SIGNAL